# FASCICULE DE BREVET EUROPEEN

(11) **EP 3 500 413 B1**
(45) Date de publication et mention de la délivrance du brevet: **01.07.2020**
(21) Numéro de dépôt: 17771794.9
(22) Date de dépôt: 07.08.2017
(51) Int. Cl.: B29B 11/16, B29L 23/00

(54) **INSTALLATION ET PROCEDE DE MISE EN FORME D'UNE PREFORME FIBREUSE DE REVOLUTION PRESENTANT EN SECTION RADIALE UN PROFIL EVOLUTIF**
ANLAGE UND VERFAHREN ZUM FORMEN EINER ROTIERENDEN FASERIGEN VORFORM MIT EINEM SICH ENTWICKELNDEN PROFIL IM RADIALEN QUERSCHNITT
FACILITY AND METHOD FOR SHAPING A ROTATING FIBROUS PREFORM HAVING AN EVOLVING PROFILE IN THE RADIAL CROSS-SECTION

(30) Priorité: 16.08.2016 FR 1657768
(43) Date de publication de la demande: 26.06.2019
(73) Titulaire: Safran Aircraft Engines, 75015 Paris (FR)
(72) Inventeur: FABRE, Hubert, Jean, Marie, 77550 Moissy-Cramayel (FR); HELLOT, Jérémy, 77550 Moissy-Cramayel (FR)
(74) Mandataire: Cabinet Beau de Loménie
(86) Numéro de dépôt international: PCT/FR2017/052204
(87) Numéro de publication internationale: WO 2018/033671

(56) Documents cités:
- WO-A1-2014/174193
- DE-A1-102013 210 034

## Description

### Arrière-plan de l'invention

La présente invention concerne la mise en forme de préformes fibreuses par enroulement d'une texture fibreuse obtenue par tissage tridimensionnel (3D) ou multicouche. De telles préformes fibreuses constituent des structures fibreuses de renfort de pièces en matériau composite.

L'invention concerne plus particulièrement les préformes fibreuses destinées à former des renforts de pièces en matériau composite de révolution présentant en section radiale un profil évolutif (variation de forme et/ou d'épaisseur) tel que par exemple un carter de soufflante de moteur aéronautique. La préforme fibreuse d'une telle pièce est réalisée par tissage d'une texture fibreuse et enroulement sous tension de cette texture sur un moule de révolution comportant une surface d'enroulement ayant en section radiale un profil en relief correspondant au profil de la pièce à fabriquer.

Afin de réaliser une texture fibreuse adaptée à la forme évolutive du moule d'injection, on utilise un tissage en forme, encore appelé « contour weaving » ou « outline weaving », qui consiste à appeler une longueur différente de fils de chaîne en fonction de leur position sur la largeur de la texture fibreuse tissée sous forme de bande de manière à obtenir des rapports entre les longueurs de fils de chaîne (direction tangentielle) similaires aux rapports entre les rayons définissant le profil évolutif de la pièce finale à fabriquer.

La texture fibreuse ainsi tissée est stockée sur un mandrin de stockage pour être ultérieurement enroulée sous tension sur un moule d'injection de révolution comportant une surface d'enroulement ayant en section radiale un profil en relief correspondant au profil de la pièce à fabriquer. La mise sous tension de la texture lors de son enroulement sur le moule est réalisée par le mandrin de stockage encore appelé mandrin « take-up », un ou plusieurs rouleaux suiveurs étant placés entre le mandrin de stockage et le moule d'injection. Le ou les rouleaux suiveurs présentent sur leur largeur axiale un rayon variable définissant une surface externe à profil en relief qui permet de conserver les rapports de longueurs de fils définis lors du tissage entre le mandrin de stockage et le moule d'injection. La conservation des rapports de longueurs de fils permet ainsi de maintenir une tension homogène dans la texture fibreuse.

Lors de la mise en forme de la préforme fibreuse sur le moule, la texture fibreuse est enroulée sur elle-même plusieurs fois. A chaque tour d'enroulement, le rapport entre les différents rayons définissant le profil en relief change en fonction des couches de texture fibreuse déjà enroulées. Ces changements de profil sont d'autant plus grands que les ratios de forme et/ou d'épaisseur dans la pièce finale sont importants.

Lors de son enroulement sur le moule d'injection, la texture fibreuse peut se décadrer en raison des différences entre le profil tissé et le profil réel sur lequel elle est enroulée, ce qui entraîne des pertes de tension à certaines positions axiales dans la texture. Ces déséquilibres de tension dans la largeur de la pièce peuvent entraîner des défauts comme des vagues, des flambements de fibres, des pincements de fibres, des zones de surépaisseurs non désirées et des taux volumiques de fibres hors spécification. Ces déséquilibres de tension peuvent également compliquer la mise en forme par enroulement de la texture fibreuse en entraînant notamment la formation de plis ou de désalignements, ce qui augmente la pénibilité et le temps de la mise en forme de la texture fibreuse.

Le document WO 2014/174193 divulgue une installation pour la mise en forme d'une préforme fibreuse de révolution présentant en section radiale un profil évolutif, comprenant un mandrin de stockage destiné à stocker une texture fibreuse en forme de bande enroulée, un ou plusieurs rouleaux suiveurs et un moule de révolution sur lequel la texture fibreuse est destinée à être mise en forme par enroulement, le ou les rouleaux suiveurs étant placés entre le mandrin de stockage et le moule de révolution, le mandrin de stockage, le ou les rouleau(x) suiveur(s) et le moule présentant le long de leur axe de rotation un rayon variable de manière à définir une surface externe ayant un profil en relief.

### Objet et résumé de l'invention

L'invention vise à apporter une solution aux inconvénients précités.

A cet effet, selon l'invention, il est proposé une installation pour la mise en forme d'une préforme fibreuse de révolution présentant en section radiale un profil évolutif, comprenant un mandrin de stockage destiné à stocker une texture fibreuse en forme de bande enroulée, un ou plusieurs rouleaux suiveurs et un moule de révolution sur lequel la texture fibreuse est destinée à être mise en forme par enroulement, le ou les rouleaux suiveurs étant placés entre le mandrin de stockage et le moule de révolution, le mandrin de stockage, le ou les rouleau(x) suiveur(s) et le moule présentant le long de leur axe de rotation un rayon variable de manière à définir une surface externe ayant un profil en relief, l'installation comprenant au moins un dispositif d'ajustement de tension sur la texture fibreuse, ledit dispositif d'ajustement de tension comprenant au moins une rangée de tiges alignées selon une première direction parallèle à un axe de rotation du ou des rouleaux suiveurs,
- chaque tige présentant à une extrémité libre un embout destiné à venir en contact avec la texture fibreuse,
- chaque tige étant mobile dans une deuxième direction orthogonale à ladite première direction.

Par l'utilisation d'un ou plusieurs dispositif d'ajustement de tension pourvu de tiges mobiles dont les déplacements sont asservis par rapport aux mesures de tension des capteurs de tension les équipant, l'installation de l'invention permet de mettre en forme de préformes fibreuses à profil évolutif en section radiale dans lesquelles les pertes ou inhomogénéités de tension sont significativement réduites. Par ailleurs, les tiges des dispositifs d'ajustement de tension de l'invention peuvent également être utilisés pour augmenter localement la tension dans la texture fibreuse, par exemple pour réduire le foisonnement de la préforme dans une zone plus épaisse (pour éviter pincements et flambements).

Ces effets peuvent résulter de l'enroulement de la texture sur le moule pour sa mise en forme ou apparaître pendant la fermeture du moule lorsque la tension exercée sur la texture a été mal appliquée, et sont alors visibles sur la pièce injectée. Avantageusement, lors de son enroulement sur le moule, la préforme fibreuse présente peu de défauts (vagues sur les premiers tours enroulés, tension mal appliquée engendrant des flambements et/ou pincements de fibres lors de la fermeture du moule, zones de surépaisseurs non désirées, taux volumiques de fibres hors spécification, plis, désalignements, etc.) par rapport à une préforme fibreuse réalisée selon l'art antérieur où les déséquilibres de tension sont plus importants. On réduit ainsi les arrêts inopinés de la machine d'enroulement habituellement nécessaires pour reprendre les défauts tels que des plis ou effondrement de portions de la texture qui requièrent en outre un retour en arrière de la machine ainsi qu'une intervention d'un ou plusieurs techniciens. Avantageusement, une telle installation permet en outre de fabriquer des préformes fibreuses distinctes présentant des profils proches avec un même rouleau suiveur, c'est-à-dire sans nécessiter le remplacement de ce rouleau suiveur contrairement à l'état de l'art.

Selon une première caractéristique particulière de l'installation de l'invention, chaque tige est équipée d'un capteur de tension configuré pour mesurer la tension s'exerçant sur son embout, chaque tige étant montée sur un système d'actionnement configuré pour déplacer la tige selon la deuxième direction en fonction de la mesure de tension du capteur.

Selon une deuxième caractéristique particulière de l'installation de l'invention, l'embout de chaque tige est bombé.

Selon une troisième caractéristique particulière de l'installation de l'invention, l'embout de chaque tige comprend une roulette.

Selon une quatrième caractéristique particulière de l'installation de l'invention, au moins un dispositif d'ajustement de tension est disposé avant ou après un rouleau suiveur, ledit dispositif d'ajustement étant maintenu dans une position fixe.

Selon une cinquième caractéristique particulière de l'installation de l'invention, ledit dispositif d'ajustement est disposé entre deux rouleaux suiveurs.

Selon une sixième caractéristique particulière de l'installation de l'invention, au moins un rouleau suiveur est équipé d'un dispositif d'ajustement de tension, ledit dispositif d'ajustement de tension comprenant une pluralité de rangées de tiges réparties uniformément autour du rouleau suiveur.

Selon une septième caractéristique particulière de l'installation de l'invention, ledit dispositif d'ajustement comprend une membrane souple recouvrant les embouts desdites tiges des rangées de tiges.

L'invention a également pour objet un procédé un procédé de mise en forme d'une préforme fibreuse de révolution présentant en section radiale un profil évolutif à partir d'une texture fibreuse obtenue par tissage tridimensionnel ou multicouche, la texture fibreuse étant mise en forme par enroulement sous tension sur un moule de révolution afin d'obtenir la préforme fibreuse, la texture fibreuse étant déroulée à partir d'un mandrin de stockage, la texture fibreuse circulant sur un ou plusieurs rouleaux suiveurs placés entre le mandrin de stockage et le moule de révolution, le mandrin de stockage, chaque rouleau suiveur et le moule présentant le long de leur axe de rotation un rayon variable de manière à définir une surface externe ayant un profil en relief, ce procédé comprenant une étape d'ajustement de tension sur la texture fibreuse via au moins un dispositif d'ajustement de tension, ledit dispositif d'ajustement de tension comprenant au moins une rangée de tiges alignées selon une première direction parallèle à un axe de rotation du ou des rouleaux suiveurs,
- chaque tige présentant à une extrémité libre un embout destiné à venir en contact avec la texture fibreuse,
- chaque tige étant mobile dans une deuxième direction orthogonale à ladite première direction, et
- chaque tige étant en outre équipée d'un capteur de tension configuré pour mesurer la tension s'exerçant sur son embout, chaque tige étant montée sur un système d'actionnement configuré pour déplacer la tige selon la deuxième direction en fonction de la mesure de tension du capteur, l'étape d'ajustement de tension de la texture fibreuse étant réalisée par une étape de déplacement d'une ou plusieurs tiges, suite à une étape de mesure de tension s'exerçant sur l'embout de chaque tige.

Selon une première caractéristique particulière du procédé de l'invention, le déplacement de chaque tige est réalisé de manière indépendante en réponse à la mesure de tension du capteur de tension dont elle est équipée.

Selon une deuxième caractéristique particulière du procédé de l'invention, au moins un rouleau suiveur est équipé d'un dispositif d'ajustement de tension, ledit dispositif d'ajustement de tension comprenant une pluralité de rangées de tiges réparties uniformément autour du rouleau suiveur, ce procédé comprenant une étape de déplacement simultané de tiges disposées selon une même position axiale en réponse aux mesures de tension des capteurs de tension dont elles sont équipées.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une installation pour la mise en forme d'une texture fibreuse à forme évolutive conformément à un mode de réalisation de l'invention ;
- la figure 2 est une vue schématique d'une installation pour la mise en forme d'une texture fibreuse à forme évolutive selon un autre mode de réalisation ;
- la figure 3 est une vue schématique d'une installation pour la mise en forme d'une texture fibreuse à forme évolutive selon un autre mode de réalisation ;la figure 4 est une vue schématique d'une installation pour la mise en forme d'une texture fibreuse à forme évolutive selon un autre mode de réalisation ;
- la figure 5 est une vue schématique en perspective montrant l'enroulement d'une texture fibreuse sur le moule d'injection de l'installation d'une des figures 1 à 4 ;
- la figure 6 est une vue schématique en coupe axiale selon le plan VI de la figure 1 d'un rouleau suiveur équipé d'un dispositif d'ajustement de tension selon un mode de réalisation ;
- la figure 7 est une vue schématique en coupe axiale selon le plan VII de la figure 1 d'un rouleau suiveur équipé d'un dispositif d'ajustement de tension selon un autre mode de réalisation ;
- la figure 8 est une vue en coupe axiale selon le plan VIII de la figure 2 d'un dispositif d'ajustement de tension selon autre un mode de réalisation.

### Description détaillée de modes de réalisation

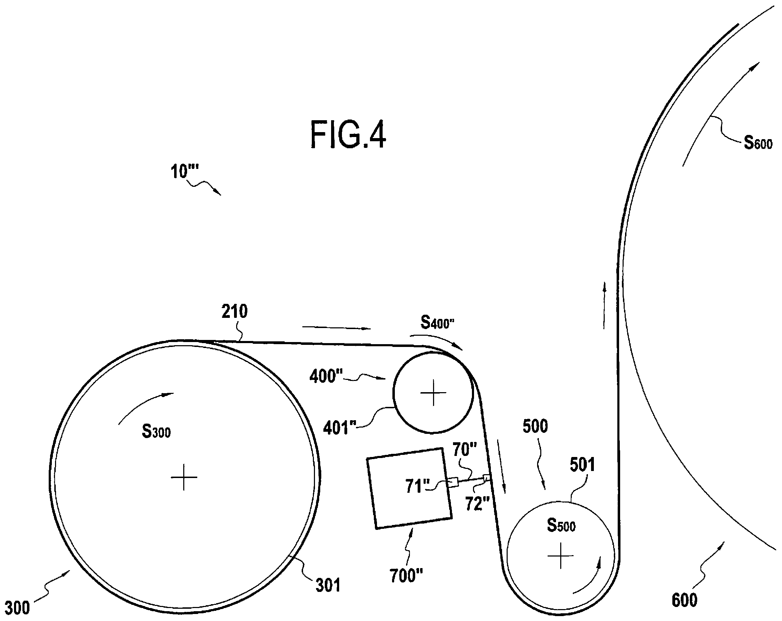

L'invention s'applique d'une manière générale à la réalisation de préformes fibreuses de révolution présentant en coupe radiale un profil évolutif et qui sont aptes à constituer des renforts fibreux, ces préformes étant destinées à être utilisées pour la fabrication de pièces en matériau composite de forme de révolution présentant également un profil évolutif et/ou une épaisseur variable notamment en section radiale. La section radiale correspond à un plan défini par la direction axiale et la direction radiale du moule sur lequel la préforme est mise en forme. La direction axiale DA et la direction radiale DR sont indiquées sur la figure 4. Les pièces sont obtenues par enroulement d'une texture fibreuse sur un moule, injection d'une composition fluide, telle qu'une résine, dans la préforme fibreuse ainsi constituée, puis traitement thermique de ladite composition afin d'obtenir la matrice.

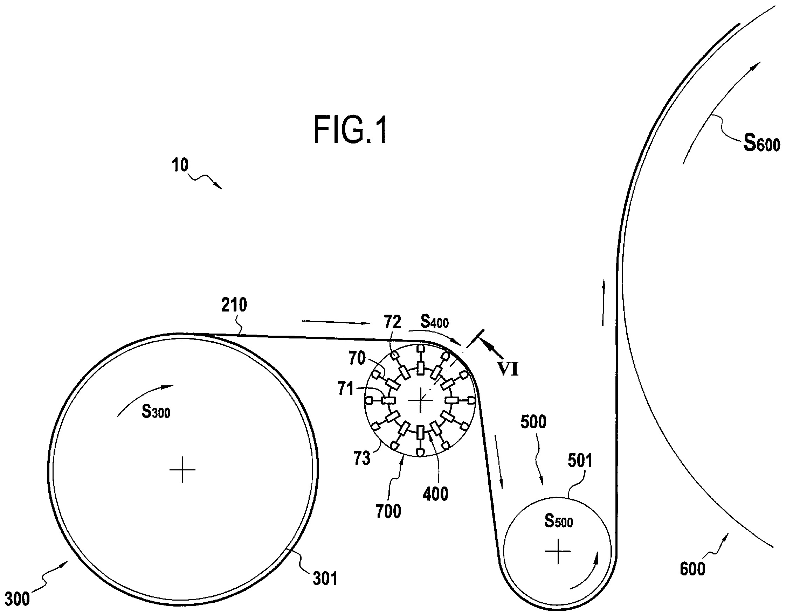

Les figures 1, 2, 3 et 4 représentent des installations 10, 10', 10" et 10"' pour la mise en forme d'une préforme fibreuse à forme évolutive conformément à différents modes de réalisation de l'invention. Chaque installation 10, 10', 10" et 10"' comprend un mandrin de stockage 300, un ou plusieurs rouleaux suiveurs 400, 400', 400" et 500 placés en aval du mandrin 300 selon le sens de défilement de la texture fibreuse et un moule d'injection 600 disposé en aval du rouleau suiveur 500.

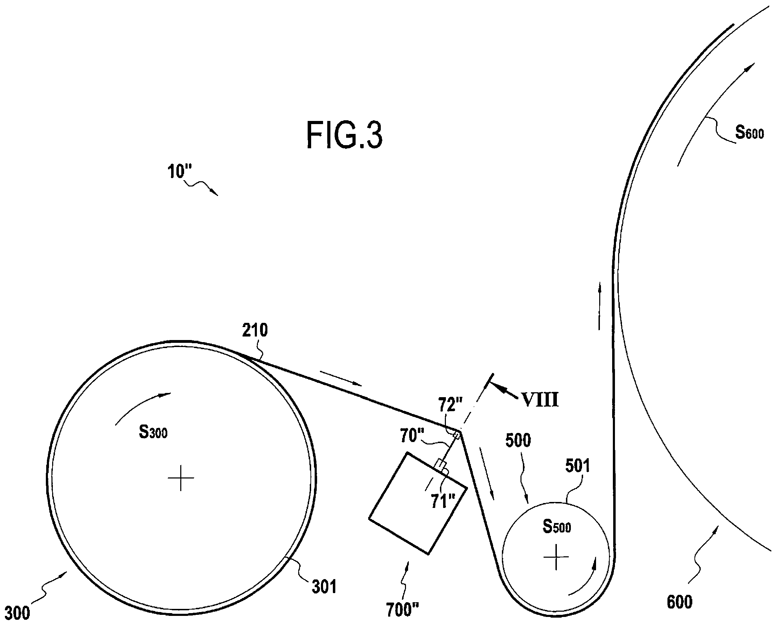

Les installations 10, 10', 10" des figures 1, 2 et 4 comprennent à titre d'exemple deux rouleaux suiveurs 400, 400" et 500, tandis que l'installation 10" la figure 3 comprend un seul rouleau suiveur 500.

Une texture fibreuse 210 présente sur le mandrin de stockage 300 est déroulée à partir de celui-ci pour être mise en forme par enroulement sur le moule d'injection 600. Selon un mode de réalisation, l'enroulement peut se faire sous une tension contrôlée au niveau du mandrin de stockage.

La structure fibreuse 210 est obtenue par tissage tridimensionnel ou par tissage multicouche réalisé de façon connue au moyen d'un métier à tisser de type jacquard sur lequel on a disposé un faisceau de fils de chaînes ou torons en une pluralité de couches. Les fils de chaînes sont liés par des fils de trame dans la structure obtenue.

Par "tissage tridimensionnel" ou "tissage 3D", on entend ici un mode de tissage par lequel certains au moins des fils de trame lient des fils de chaîne sur plusieurs couches de chaîne ou inversement. Le tissage 3D peut être de type interlock comme décrit dans le document WO 2006/136755.

Par "tissage multicouche", on désigne ici un tissage 3D avec plusieurs couches de chaîne dont l'armure de base de chaque couche est équivalente à une armure de tissu 2D classique, tel qu'une armure de type toile, satin ou sergé, mais avec certains points de l'armure qui lient les couches de chaîne entre elles ou inversement.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

La structure fibreuse peut être notamment tissée à partir de fils de fibres de carbone, de céramique telle que du carbure de silicium, de verre, ou encore d'aramide.

Afin de réaliser une texture fibreuse adaptée à la forme évolutive de la préforme fibreuse à former sur le moule d'injection, on utilise un tissage en forme, encore appelé « contour weaving », qui consiste à appeler une longueur différente de fils de chaîne en fonction de leur position sur la largeur de la texture fibreuse tissée sous forme de bande. A cet effet, on utilise un ou plusieurs rouleaux d'appel en sortie du métier à tisser qui présentent sur leur largeur axiale un rayon variable définissant une surface externe à profil en relief permettant d'appeler des longueurs de fils de chaîne différentes en fonction de leur position sur la largeur de la texture fibreuse, une plus grande longueur de fil de chaîne étant appelée par la ou les parties d'un rouleau d'appel ayant un rayon plus important que le reste du rouleau. Les appels différentiels réalisés par les rouleaux d'appel se répercutent jusque dans la cellule de tissage du métier à tisser en tirant la bonne longueur de fils de chaîne avant l'insertion de la colonne de fils de trame suivante. La texture ainsi tissée est enroulée sur un mandrin ou tambour de stockage, encore appelé mandrin « take-up », situé en aval des rouleaux d'appel. La texture fibreuse est ainsi stockée en vue en vue de sa mise en forme ultérieure sur un moule.

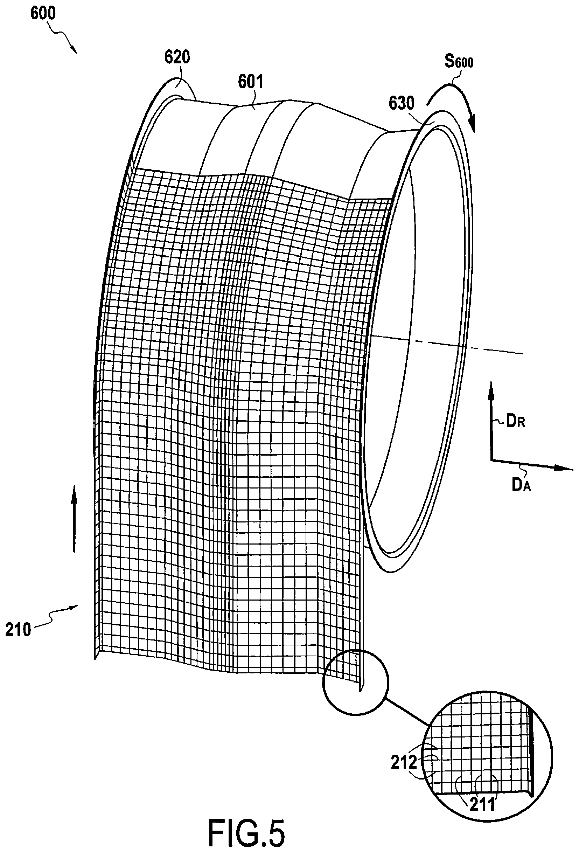

Comme illustrée sur la figure 5, la préforme fibreuse est mise en forme par enroulement sur un moule d'injection 600 de la texture fibreuse 210. La texture fibreuse 210 est réalisée par tissage tridimensionnel ou multicouches entre une pluralité de fils de chaîne 211 et une pluralité de fils de trame 212. La texture fibreuse 210 forme une bande présentant en section transversale un profil évolutif, c'est-à-dire une variation de forme et/ou d'épaisseur en coupe transversale. Le moule présente en section radiale un profil correspondant à celui de la pièce à réaliser qui correspond dans l'exemple décrit ici à un carter de soufflante de moteur aéronautique.

A cet effet, le moule d'injection 600 présente une surface externe 601 dont le profil en relief correspond à la surface interne du carter à réaliser. Par son enroulement sur le moule d'injection 600, la texture fibreuse 210 épouse le profil de celui-ci. Le moule d'injection 600 comporte également deux flasques 620 et 630 pour former des parties de préforme fibreuse correspondant aux brides du carter à fabriquer. Le moule d'injection 600 est entraîné en rotation suivant le sens de rotation S₆₀₀, par exemple par un moteur électrique (non représenté sur la figure 5), tandis que la texture fibreuse 210 est mise sous tension entre le mandrin de stockage 300 et le moule d'injection 600.

Le ou les rouleaux suiveurs 400, 400', 400" et 500 placés en aval du mandrin de stockage 300 sont entraînés par la texture fibreuse 210 suivant respectivement des sens de rotation S₄₀₀, S_{400'}, S_{400"} et S₅₀₀ indiqués sur les figures 1 à 4. Certains rouleaux suiveurs 400", 500 présentent sur leur largeur axiale, c'est-à-dire le long de leur axe de rotation, un rayon variable de manière à définir respectivement des surfaces externes 401", 501 ayant un profil en relief correspondant au profil visé pour la préforme fibreuse à réaliser.

Chaque installation 10, 10', 10" et 10'" comprend en outre un mandrin ou tambour de stockage 300, encore appelé mandrin « take-up », qui est entraîné principalement en rotation suivant le sens de rotation S₃₀₀ et qui présente également sur sa largeur axiale un rayon variable de manière à définir une surface externe 301 ayant un profil en relief correspondant au profil visé pour la préforme fibreuse afin de limiter la déformation de la texture fibreuse 210 lors de son stockage. Si le mandrin de stockage 300 assure la mise sous tension de la texture fibreuse lors de son enroulement, il se peut que la rotation de celui-ci soit momentanément stoppée ou inversée par rapport au sens de rotation S₃₀₀ afin de maintenir la tension sur la texture lors de son enroulement sur le moule d'injection.

Conformément à l'invention, chaque installation 10, 10', 10" et 10"' comprend au moins un dispositif d'ajustement de tension sur la texture fibreuse 210. Avantageusement, chaque dispositif d'ajustement est en contact avec la texture fibreuse 210 et permet d'exercer ou de relâcher une tension sur celle-ci.

En références aux différents modes de réalisation et comme il va être vu plus loin, chaque dispositif d'ajustement de tension comprend de manière générale au moins une rangée de tiges alignées selon une première direction parallèle à un axe de rotation d'un rouleur suiveur 400, 400', 400" et 500. Chaque tige présente en outre à une extrémité libre un embout destiné à venir en contact avec la texture fibreuse 210.

Le déplacement d'une ou plusieurs tiges peut alors être effectué dans une deuxième direction orthogonale à la première direction, permettant ainsi d'appliquer une tension ou de relâcher une tension préexistante sur la texture fibreuse 210. En d'autres termes, la deuxième direction d'une tige correspond à l'axe relatif à cette tige.

Ainsi, selon un mode de réalisation, l'enroulement de la texture fibreuse 210 peut se faire sous une tension exercée uniquement par les tiges d'un dispositif d'ajustement. Lors de cet enroulement, le mandrin de stockage et le moule d'injection 600 tournent alors à des vitesses prédéfinies selon toujours un même sens de rotation.

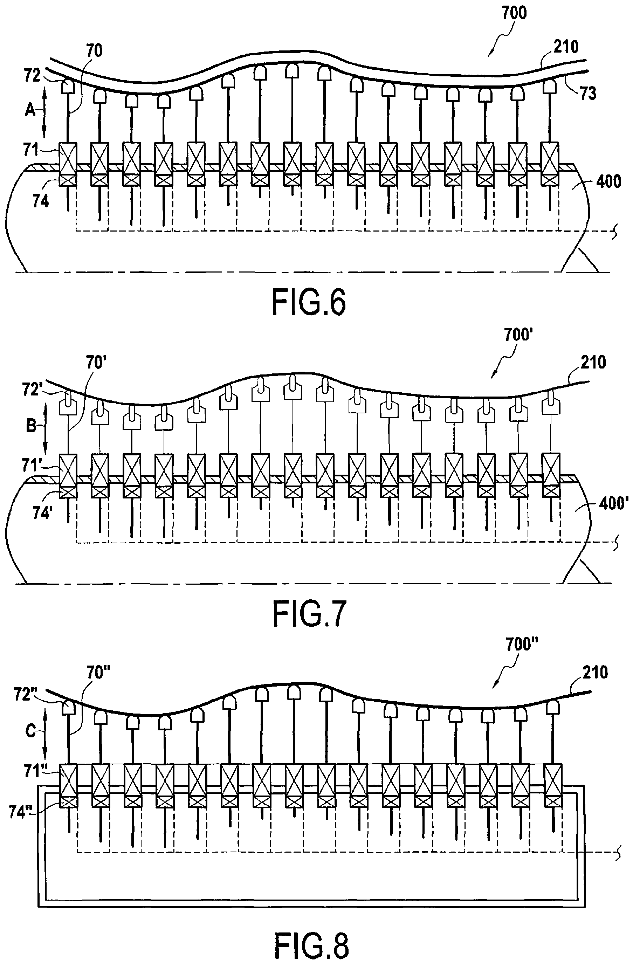

La figure 1 illustre un premier mode de réalisation d'un dispositif d'ajustement 700 de tension et la figure 6 une vue de celui-ci selon le plan de coupe VI de la figure 1. Comme il peut être observé sur les figures 1 et 6, le rouleau suiveur 400 est équipé d'un dispositif d'ajustement 700 de tension.

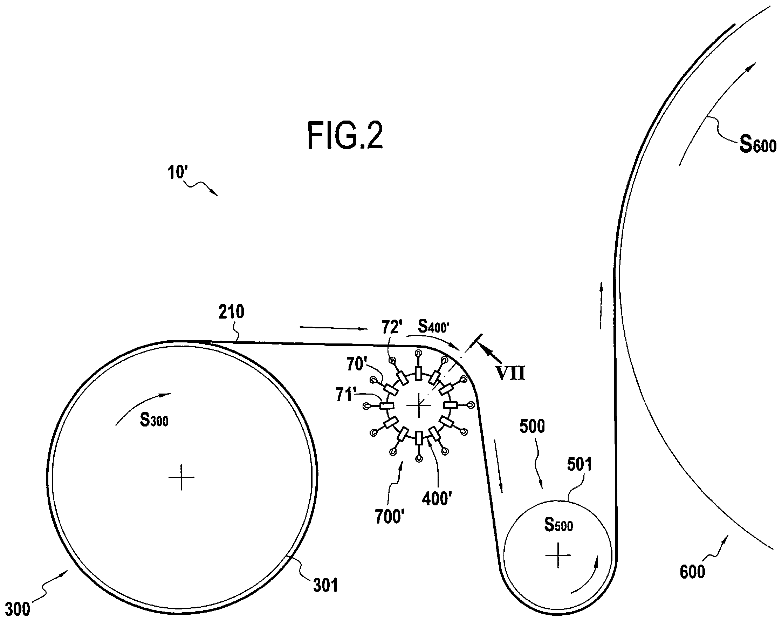

La figure 7 illustre une variante de réalisation de dispositif d'ajustement 700' équipant un rouleau suiveur 400', selon le plan de coupe VII de la figure 2.

Sur ces figures, chaque dispositif d'ajustement 700, 700' de tension comprend ici une pluralité de rangées de tiges 70, 70' réparties uniformément autour du rouleau suiveur 400, 400'. Les tiges 70, 70' de chaque rangée sont alignées selon une première direction parallèle à l'axe de rotation du rouleau suiveur 400, 400'.

Chaque tige 70, 70' est montée sur un système d'actionnement 71, 71'. Chaque système d'actionnement 71, 71' est configuré pour déplacer sa tige 70, 70' selon une deuxième direction orthogonale à la première direction, c'est-à-dire ici dans une direction radiale. Chaque tige 70, 70' présente en outre à une extrémité libre un embout 72, 72' destiné à venir en contact avec la texture fibreuse 210.

Dans le mode de réalisation illustré sur la figure 6, chaque embout 72 présente une forme bombée.

Pour ce mode de réalisation, comme représenté sur les figures 1 et 6, il est possible de recouvrir les embouts 72 des rangées de tiges 70 par une membrane souple 73, de manière à soutenir la texture fibreuse 210 circulant sur le système d'ajustement 700 de tension. Un tel soutien peut s'avérer particulièrement avantageux, en fonction des écarts choisis entre chaque tige 70. La membrane souple 73 est alors déformable, de sorte à pouvoir suivre les déplacements radiaux des tiges 70 et de leurs embouts 72.

Ainsi, dans le mode de réalisation illustré sur les figures 1 et 6, les embouts 72 sont au contact de la texture fibreuse 210 par l'intermédiaire de la membrane souple 73. Dans un autre mode de réalisation non-illustré, la membrane souple 73 est absente et les embouts 72 bombés peuvent directement venir au contact de la texture fibreuse 210.

Dans le mode de réalisation illustré sur les figures 2 et 7, chaque embout 72' présent à l'extrémité de chaque tige 70' est une roulette. Chaque roulette est à titre d'exemple disposée à l'extrémité libre de chaque tige 70' par l'intermédiaire de bras.

Dans ce mode de réalisation, les embouts 72' viennent alors directement au contact de la texture fibreuse 210, les roulettes assurant le soutien de la texture fibreuse 210 circulant sur les embouts 72'.

Quel que soit le mode de réalisation choisi, chaque tige 70, 70' est en outre associée à un capteur de tension 74, 74' configuré pour mesurer la tension s'exerçant sur son embout 72 et 72'. Chaque capteur de tension 74, 74' est, à titre d'exemple, connecté (traits pointillées sur les figures 6 et 7) à un calculateur électronique (non-illustré) permettant de commander le déplacement d'une ou plusieurs tiges 70, 70' en fonction des mesures de tension de chaque capteur de tension 74, 74'. Chaque système d'actionnement 71, 71' de chaque tige 70, 70' est donc configuré pour déplacer selon la deuxième direction, ici la direction radiale, sa tige 70, 70' en fonction de la mesure de tension du capteur 74, 74'.

Avantageusement, en fonction de la tension mesurée sur chaque embout 72, 72', il est alors possible d'ajuster localement la tension s'exerçant sur la texture fibreuse 210, via l'extension ou le retrait selon la deuxième direction de chaque tige 70, 70'. Les différentes directions de déplacements des tiges 70, 70' sont symbolisées par les flèches bidirectionnelles A et B sur les figures 6 et 7.

Selon un mode de réalisation, le déplacement de chaque tige 70, 70' est réalisé de manière indépendante en réponse à la mesure de tension du capteur de tension 74, 74' dont elle est équipée. Le déplacement de chaque tige 70, 70' via son système d'actionnement 71, 71' est donc commandé de manière individuelle.

Dans un autre mode de réalisation, il est possible d'effectuer un déplacement simultané d'un ensemble de tiges 70, 70' présentant une même position axiale sur le rouleau suiveur 400, 400' en réponse aux mesures de tension des capteurs de tension 74, 74' dont elles sont équipées. Un même déplacement est à titre d'exemple effectué pour des tiges 70, 70' présentant une même position axiale, en fonction d'une valeur maximale ou minimale de tension mesurée, déterminée parmi l'ensemble des mesures réalisée par les capteurs de tension 74, 74' des tiges 70, 70'. Avantageusement, un tel mode de réalisation permet alors de simplifier la commande de déplacement des tiges 70, 70'.

Selon divers modes de réalisation, un ou plusieurs rouleaux suiveurs 400, 400', 500 sont équipés du dispositif d'ajustement 700, 700' précédemment décrit. Le ou les rouleaux suiveurs 400, 400', 500 équipés d'un dispositif d'ajustement 700, 700' peuvent, par ailleurs, être éventuellement motorisés afin de permettre leur rotation si la présence des tiges 70, 70' empêche la texture fibreuse 210 d'entraîner ces rouleaux.

Dans un autre mode de réalisation, le système d'ajustement de tension peut être indépendant des rouleaux suiveurs 400, 400', 500. Les installations 10" et 10'" des figures 3 et 4 comprennent, à titre d'exemple, un dispositif d'ajustement de tension 700" maintenu dans une position fixe.

La figure 8 illustre un mode de réalisation du dispositif d'ajustement 700" selon le plan de coupe VIII de la figure 3.

Le dispositif 700" est formé d'au moins une rangée de tiges 70" alignées selon une première direction parallèle à l'axe de rotation d'un rouleau suiveur 400, 400', 400", 500. Chaque tige 70" est montée sur un système d'actionnement 71" configuré pour déplacer sa tige 70" selon une deuxième direction orthogonale à la première direction. Chaque tige 70" présente à une extrémité libre un embout 72" destiné à venir en contact avec la texture fibreuse 210. Dans le mode de réalisation illustré, chaque embout 72" est de forme bombée. Dans un autre mode de réalisation non-illustré, les embouts 72" peuvent être des roulettes, disposées aux extrémités libres des tiges 70" à l'aide de bras. Dans l'exemple illustré, chaque embout 72" est par ailleurs en contact direct avec la texture fibreuse 210.

Chaque tige 70" est en outre associée à un capteur de tension 74" configuré pour mesurer la tension s'exerçant sur son embout 72". Chaque capteur de tension 74" est, à titre d'exemple, connecté (traits pointillées sur la figure 8) à un calculateur électronique (non-illustré) permettant de commander le déplacement d'une ou plusieurs tiges 70" en fonction des mesures de tension de chaque capteur de tension 74". Chaque système d'actionnement 71" de chaque tige 70" est donc configuré pour déplacer selon la deuxième direction sa tige 70", en fonction de la mesure de tension du capteur de tension 74".

Dans le mode de réalisation de l'installation 10" de la figure 3, le dispositif d'ajustement 700" de tension est utilisé en lieu et place du rouleau suiveur 400, 400'. Dans le mode de réalisation illustré sur la figure 4, le dispositif d'ajustement de tension 700" est disposé entre les rouleaux suiveurs 400" et 500. D'une manière générale, il est possible de disposer le dispositif d'ajustement 700" de tension, maintenu dans une position fixe, avant ou après un rouleau suiveur 400, 400', 400", 500 ou entre deux rouleaux suiveurs 400, 400', 400", 500. Il est par ailleurs possible de disposer dans une même installation un dispositif d'ajustement de tension fixe, tel le dispositif d'ajustement 700", et d'équiper aussi un ou plusieurs rouleaux suiveurs 400, 400', 400", 500 d'un dispositif d'ajustement de tension, tel un des dispositifs d'ajustement de tension 700, 700"

Avantageusement, l'ensemble des modes de réalisation précédemment décrits permettent d'ajuster localement la tension s'exerçant sur la texture fibreuse 210. Cet ajustement de tension peut être mis en œuvre lorsque la tension exercée sur la texture fibreuse 210 doit être modifiée, par exemple lorsque la différence entre le profil initial défini par la surface externe du moule et le profil réel sur lequel la texture est enroulée est telle qu'elle peut entraîner des pertes de tension à certaines positions axiales dans la texture. Il est ainsi possible de contrôler la mise sous tension ou le relâchement en tension de la texture fibreuse 210 en contact avec embouts 72, 72', 72" des dispositifs d'ajustement 700, 700', 700" de tension. Ceci permet, à titre d'exemple, d'appliquer des tensions plus fortes sur des zones plus épaisses de la texture fibreuse 210, des tensions moins fortes pour des zones plus fines, ou encore de relâcher la tension exercée sur la texture fibreuse 210, de manière à prévenir tout glissement ou formation de pli sur la texture fibreuse 210 lors de son enroulement autour du moule d'injection 600.

Ainsi, par la mise en œuvre d'un ou plusieurs dispositif d'ajustement 700, 700', 700" de tension munis de tiges 70 ,70', 70" mobiles, dont les déplacements sont asservis par rapport aux mesures de tension des capteurs de tension 74, 74', 74" les équipant, l'installation et le procédé de l'invention permettent de mettre en forme des préformes fibreuses de révolution présentant en section radiale un profil évolutif dans lesquelles les pertes ou inhomogénéités de tension sont significativement réduites. Lors de son enroulement sur le moule d'injection, la préforme fibreuse formée présente peu de défauts (vagues, flambements et/ou pincements de fibres, zones de surépaisseurs non désirées, taux volumiques de fibres hors spécification, plis, désalignements, etc.) par rapport à une préforme formée selon l'art antérieur ou les déséquilibres de tension sont plus importants. On réduit ainsi les arrêts inopinés de la machine d'enroulement habituellement nécessaires pour reprendre les défauts tels que des plis ou effondrement de portions (par exemple des brides) de la préforme qui requièrent en outre un retour en arrière de la machine ainsi qu'une intervention d'un ou plusieurs techniciens.

## Revendications

1. Installation (10, 10', 10", 10"') pour la mise en forme d'une préforme fibreuse de révolution présentant en section radiale un profil évolutif, comprenant un mandrin de stockage (300) destiné à stocker une texture fibreuse (210) en forme de bande enroulée, un ou plusieurs rouleaux suiveurs (400, 400', 400", 500) et un moule (600) de révolution sur lequel la texture fibreuse (210) est destinée à être mise en forme par enroulement, le ou les rouleaux suiveurs (400, 400', 400", 500) étant placés entre le mandrin de stockage (300) et le moule (600) de révolution, le mandrin de stockage (300), le ou les rouleau(x) suiveur(s) (400, 400', 400", 500) et le moule (600) présentant le long de leur axe de rotation un rayon variable de manière à définir une surface externe ayant un profil en relief,
l'installation (10, 10', 10", 10"') étant **caractérisée en ce qu'**elle comprend au moins un dispositif d'ajustement (700, 700', 700") de tension sur la texture fibreuse (210), ledit dispositif d'ajustement (700, 700', 700") de tension comprenant au moins une rangée de tiges (70, 70', 70") alignées selon une première direction parallèle à un axe de rotation du ou des rouleaux suiveurs (400 , 400', 400", 500),
- chaque tige (70, 70', 70") présentant à une extrémité libre un embout (72, 72', 72") destiné à venir en contact avec la texture fibreuse (210),
- chaque tige étant mobile dans une deuxième direction orthogonale à ladite première direction.

2. Installation (10, 10', 10", 10"') selon la revendication 1, dans laquelle chaque tige (70, 70', 70") est équipée d'un capteur de tension (74, 74', 74") configuré pour mesurer la tension s'exerçant sur son embout (72, 72', 72"), chaque tige (70, 70', 70") étant montée sur un système d'actionnement (71, 71', 71") configuré pour déplacer la tige (70, 70', 70") selon la deuxième direction en fonction de la mesure de tension du capteur.

3. Installation (10, 10', 10", 10"') selon la revendication 1 ou 2, dans laquelle l'embout (72, 72', 72") de chaque tige (70, 70', 70") est bombé.

4. Installation (10, 10', 10", 10'") selon la revendication 1 ou 2, dans laquelle l'embout (72, 72', 72") de chaque tige (70, 70', 70") comprend une roulette.

5. Installation (10", 10"') selon l'une quelconque des revendications 1 à 4, dans laquelle au moins un dispositif d'ajustement (700") de tension est disposé avant ou après un rouleau suiveur (400, 400', 400", 500), ledit dispositif d'ajustement étant maintenu dans une position fixe.

6. Installation (10"') selon la revendication 5, dans laquelle ledit dispositif d'ajustement (700") est disposé entre deux rouleaux suiveurs (400, 400', 400", 500).

7. Installation (10, 10') selon l'une quelconque des revendications 1 à 4, dans laquelle au moins un rouleau suiveur (400, 400') est équipé d'un dispositif d'ajustement (700, 700') de tension, ledit dispositif d'ajustement de tension comprenant une pluralité de rangées de tiges (70, 70') réparties uniformément autour du rouleau suiveur (400, 400').

8. Installation (10, 10', 10", 10"') selon la revendication 7, dans laquelle ledit dispositif d'ajustement (700, 700') comprend une membrane souple (72) recouvrant les embouts desdites tiges (70, 70') des rangées de tiges.

9. Procédé de mise en forme d'une préforme fibreuse de révolution présentant en section radiale un profil évolutif à partir d'une texture fibreuse (210) obtenue par tissage tridimensionnel ou multicouche, la texture fibreuse (210) étant mise en forme par enroulement sous tension sur un moule (600) de révolution afin d'obtenir la préforme fibreuse, la texture fibreuse (210) étant déroulée à partir d'un mandrin de stockage (300), la texture fibreuse (210) circulant sur un ou plusieurs rouleaux suiveurs (400, 400', 400", 500) placés entre le mandrin de stockage (300) et le moule (600) de révolution, le mandrin de stockage (300), chaque rouleau suiveur (400, 400', 400", 500) et le moule (600) présentant le long de leur axe de rotation un rayon variable de manière à définir une surface externe ayant un profil en relief,
ce procédé étant **caractérisé en ce qu'**il comprend une étape d'ajustement de tension sur la texture fibreuse (210) via au moins un dispositif d'ajustement (700, 700', 700") de tension, ledit dispositif d'ajustement (700, 700', 700") de tension comprenant au moins une rangée de tiges (70, 70', 70") alignées selon une première direction parallèle à un axe de rotation du ou des rouleaux suiveurs (400 , 400', 400", 500),
- chaque tige (70, 70', 70") présentant à une extrémité libre un embout (72, 72', 72") destiné à venir en contact avec la texture fibreuse (210),
- chaque tige (70, 70', 70") étant mobile dans une deuxième direction orthogonale à ladite première direction, et
- chaque tige (70, 70', 70") étant en outre équipée d'un capteur de tension (74, 74', 74") configuré pour mesurer la tension s'exerçant sur son embout (72, 72', 72"), chaque tige (70, 70', 70") étant montée sur un système d'actionnement (71, 71', 71") configuré pour déplacer la tige (70, 70', 70") selon la deuxième direction en fonction de la mesure de tension du capteur,
l'étape d'ajustement de tension de la texture fibreuse (210) étant réalisée par une étape de déplacement d'une ou plusieurs tiges (70, 70', 70"), suite à une étape de mesure de tension s'exerçant sur l'embout (72, 72', 72") de chaque tige.

10. Procédé selon la revendication 8, dans lequel le déplacement de chaque tige (70, 70', 70") est réalisé de manière indépendante en réponse à la mesure de tension du capteur de tension (74, 74', 74") dont elle est équipée.

11. Procédé selon la revendication 8, dans lequel au moins un rouleau suiveur (400, 400', 400", 500) est équipé d'un dispositif d'ajustement (700, 700', 700") de tension, ledit dispositif d'ajustement de tension comprenant une pluralité de rangées de tiges (70, 70', 70") réparties uniformément autour du rouleau suiveur (400, 400', 400", 500), ce procédé comprenant une étape de déplacement simultané de tiges (70, 70', 70") disposées selon une même position axiale en réponse aux mesures de tension des capteurs de tension (74, 74', 74") dont elles sont équipées.

## Patentansprüche

1. Anlage (10, 10', 10", 10"') zum Informbringen eines Rotationsfaservorformlings, der im radialen Querschnitt ein veränderliches Profil aufweist, umfassend einen Lagerdorn (300), der zur Lagerung einer aufgewickelten bahnförmigen Faserstruktur (210) bestimmt ist, eine oder mehrere Folgerolle(n) (400, 400', 400", 500) und eine Rotationsform (600), auf der die Faserstruktur (210) durch Aufwickeln in Form gebracht werden soll, wobei die Folgerolle oder -rollen (400, 400', 400", 500) zwischen dem Lagerdorn (300) und der Rotationsform (600) angeordnet sind, wobei der Lagerdorn (300), die Folgerolle(n) (400, 400', 400", 500) und die Form (600) entlang ihrer Rotationsachse einen variablen Radius aufweisen, um eine Außenfläche mit einem erhabenen Profil zu definieren,
wobei die Anlage (10, 10', 10", 10'") **dadurch gekennzeichnet ist, dass** sie wenigstens eine Vorrichtung zum Einstellen (700, 700', 700") der Spannung an der Faserstruktur (210) umfasst, wobei die Vorrichtung zum Einstellen (700, 700', 700") der Spannung wenigstens eine Reihe von Stangen (70, 70', 70") umfasst, die in einer ersten Richtung, welche parallel zu einer Rotationsachse der Folgerolle oder -rollen (400 , 400', 400", 500) verläuft, ausgerichtet sind,
- wobei jede Stange (70, 70', 70") an einem freien Ende ein Ansatzstück (72, 72', 72") aufweist, das dazu bestimmt ist, mit der Faserstruktur (210) in Kontakt zu kommen,
- wobei jede Stange ist in einer zweiten Richtung, welche zu der ersten Richtung orthogonal verläuft, beweglich ist.

2. Anlage (10, 10', 10", 10'") nach Anspruch 1, bei der jede Stange (70, 70', 70") mit einem Spannungssensor (74, 74', 74") ausgestattet ist, der dazu ausgelegt ist, die auf ihr Ansatzstück (72, 72', 72") ausgeübte Spannung zu messen, wobei jede Stange (70, 70', 70") an einem Betätigungssystem (71, 71', 71'') angebracht ist, welches dazu ausgelegt ist, die Stange (70, 70', 70") in Abhängigkeit von der Spannungsmessung des Sensors in die zweite Richtung zu bewegen.

3. Anlage (10, 10', 10", 10'") nach Anspruch 1 oder 2, bei der das Ansatzstück (72, 72', 72") einer jeden Stange (70, 70', 70") gewölbt ist.

4. Anlage (10, 10', 10", 10'") nach Anspruch 1 oder 2, bei der das Ansatzstück (72, 72', 72") einer jeden Stange (70, 70', 70") eine Rolle umfasst.

5. Anlage (10", 10"') nach einem der Ansprüche 1 bis 4, bei der wenigstens eine Vorrichtung zum Einstellen (700") der Spannung vor oder nach einer Folgerolle (400, 400', 400", 500) angeordnet ist, wobei die Einstellvorrichtung in einer festen Position gehalten wird.

6. Anlage (10"') nach Anspruch 5, bei der die Einstellvorrichtung (700") zwischen zwei Folgerollen (400, 400', 400", 500) angeordnet ist.

7. Anlage (10, 10') nach einem der Ansprüche 1 bis 4, bei der wenigstens eine Folgerolle (400, 400') mit einer Spannungseinstellvorrichtung (700, 700') ausgestattet ist, wobei der Spannungseinstellvorrichtung mehrere Reihen von Stangen (70, 70') umfasst, die um die Folgerolle (400, 400') herum gleichmäßig verteilt sind.

8. Anlage (10, 10', 10", 10'") nach Anspruch 7, bei der die Einstellvorrichtung (700, 700') eine flexible Membran (72) umfasst, welche die Ansatzstücke der Stangen (70, 70') bedeckt.

9. Verfahren zum Informbringen eines Rotationsfaservorformlings, der im radialen Querschnitt ein veränderliches Profil aufweist, aus einer Faserstruktur (210), die durch dreidimensionales oder mehrlagiges Weben erhalten wird, wobei die Faserstruktur (210) durch Aufwickeln unter Spannung auf eine Rotationsform (600) in Form gebracht wird, um den Faservorformling zu erhalten, wobei die Faserstruktur (210) von einem Lagerdorn (300) abgewickelt wird, wobei die Faserstruktur (210) über eine oder mehrere Folgerolle(n) (400, 400', 400", 500) läuft, welche zwischen dem Lagerdorn (300) und der Rotationsform (600) angeordnet sind, wobei der Lagerdorn (300), jede Folgerolle (400, 400', 400", 500) und die Form (600) entlang ihrer Rotationsachse einen variablen Radius aufweisen, um eine Außenfläche mit einem erhabenen Profil zu definieren,
wobei dieses Verfahren **dadurch gekennzeichnet ist, dass** es einen Schritt zum Einstellen der Spannung an der Faserstruktur (210) über wenigstens eine Vorrichtung zum Einstellen (700, 700', 700") der Spannung umfasst, wobei die Vorrichtung zum Einstellen (700, 700', 700") der Spannung wenigstens eine Reihe von Stangen (70, 70', 70") umfasst, die in einer ersten Richtung, welche parallel zu einer Rotationsachse der Folgerolle oder -rollen (400 , 400', 400", 500) verläuft, ausgerichtet sind,
- wobei jede Stange (70, 70', 70") an einem freien Ende ein Ansatzstück (72, 72', 72") aufweist, das dazu bestimmt ist, mit der Faserstruktur (210) in Kontakt zu kommen,
- wobei jede Stange (70, 70', 70") in einer zweiten Richtung, welche zu der ersten Richtung orthogonal verläuft, beweglich ist, und
- wobei jede Stange (70, 70', 70") ferner mit einem Spannungssensor (74, 74', 74") ausgestattet ist, der dazu ausgelegt ist, die auf ihr Ansatzstück (72, 72', 72") ausgeübte Spannung zu messen, wobei jede Stange (70, 70', 70") an einem Betätigungssystem (71, 71', 71'') angebracht ist, welches dazu ausgelegt ist, die Stange (70, 70', 70") in Abhängigkeit von der Spannungsmessung des Sensors in die zweite Richtung zu bewegen,
wobei der Schritt des Einstellens der Spannung der Faserstruktur (210) durch einen Schritt des Bewegens von einer oder mehreren Stangen (70, 70', 70"), im Anschluss an einen Schritt des Messens der auf das Ansatzstück (72, 72', 72") einer jeden Stange ausgeübten Spannung vollzogen wird.

10. Verfahren nach Anspruch 8, bei dem das Bewegen einer jeden Stange (70, 70', 70") als Reaktion auf die Spannungsmessung des Spannungssensors (74, 74', 74 "), mit dem sie ausgestattet ist, unabhängig durchgeführt wird.

11. Verfahren nach Anspruch 8, bei dem wenigstens eine Folgerolle (400, 400', 400", 500) mit einer Spannungseinstellvorrichtung (700, 700', 700") ausgestattet ist, wobei die Spannungseinstellvorrichtung mehrere Reihen von Stangen (70, 70', 70") umfasst, die um die Folgerolle (400, 400', 400", 500) herum gleichmäßig verteilt sind, wobei dieses Verfahren einen Schritt zum gleichzeitigen Bewegen von Stangen (70, 70', 70") umfasst, die als Reaktion auf die Spannungsmessungen der Spannungssensoren (74, 74', 74"), mit denen sie ausgestattet sind, in einer gleichen axialen Position angeordnet sind.

## Claims

1. An installation (10, 10', 10", 10"') for shaping an axisymmetric fiber preform presenting a profile that varies in radial section, the installation comprising a storage mandrel (300) for storing a fiber texture (210) in the form of a wound strip, one or more follower rollers (400, 400', 400", 500), and an axisymmetric mold (600) on which the fiber texture (210) is to be shaped by being wound, the follower roller(s) (400, 400', 400", 500) being placed between the storage mandrel (300) and the axisymmetric mold (600), the storage mandrel (300), the follower roller(s) (400, 400', 400", 500), and the mold (600) presenting radii along their axes of rotation that vary so as to define outside surfaces presenting respective profiles in relief, the installation (10, 10', 10", 10"') being **characterized in that** it comprises at least one tension adjustment device (700, 700', 700") for adjusting tension on the fiber texture (210), said tension adjustment device (700, 700', 700") comprising at least one row of rods (70, 70', 70") aligned in a first direction parallel to an axis of rotation of one or more follower rollers (400, 400', 400", 500):
- each rod (70, 70', 70") presenting an endpiece (72, 72', 72") at a free end in order to come into contact with the fiber texture (210); and
- each rod being movable in a second direction orthogonal to said first direction.

2. An installation (10, 10', 10", 10"') according to claim 1, wherein each rod (70, 70', 70") is fitted with a tension sensor (74, 74', 74") configured to measure the tension acting on its endpiece (72, 72', 72"), each rod (70, 70', 70") being mounted on an actuator system (71, 71', 71") configured to move the rod (70, 70', 70") along the second direction as a function of the tension measurement from the sensor.

3. An installation (10, 10', 10", 10"') according to claim 1 or claim 2, wherein the endpiece (72, 72', 72") of each rod (70, 70', 70") is rounded.

4. An installation (10, 10', 10", 10"') according to claim 1 or claim 2, wherein the endpiece (72, 72', 72") of each rod (70, 70', 70") comprises a castor.

5. An installation (10", 10"') according to any one of claims 1 to 4, wherein at least one tension adjustment device (700") is arranged before or after a follower roller (400, 400', 400", 500), said adjustment device being maintained in a stationary position.

6. An installation (10"') according to claim 5, wherein said adjustment device (700") is arranged between two follower rollers (400, 400', 400", 500).

7. An installation (10, 10') according to any one of claims 1 to 4, wherein at least one follower roller (400, 400') is fitted with a tension adjustment device (700, 700'), said tension adjustment device comprising a plurality of rows of rods (70, 70') distributed uniformly around the follower roller (400, 400').

8. An installation (10, 10', 10", 10"') according to claim 7, wherein said adjustment device (700, 700') includes a flexible membrane (72) covering the endpieces of said rods (70, 70') of the rows of rods.

9. A method of shaping a fiber texture (210) obtained by three-dimensional or multilayer weaving to form an axisymmetric fiber preform presenting a profile that varies in radial section, the fiber texture (210) being shaped by being wound under tension onto an axisymmetric mold (600) in order to obtain the fiber preform, the fiber texture (210) being unwound from a storage mandrel (300), the fiber texture (210) travelling over one or more follower rollers (400, 400', 400", 500) placed between the storage mandrel (300) and the axisymmetric mold (600), the storage mandrel (300), each follower roller (400, 400', 400", 500), and the mold (600) presenting along their axes of rotation radii that vary so as to define an outside surface having a profile in relief, the method being **characterized in that** it comprises a step of adjusting tension on the fiber texture (210) via at least one tension adjustment device (700, 700', 700"), said tension adjustment device (700, 700', 700") comprising at least one row of rods (70, 70', 70") aligned along a first direction parallel to an axis of rotation of the follower roller(s) (400, 400', 400", 500) :
- each rod (70, 70', 70") presenting an endpiece (72, 72', 72") and a free end for coming into contact with the fiber texture (210);
- each rod (70, 70', 70") being movable in a second direction orthogonal to said first direction; and
- each rod (70, 70', 70") also being fitted with a tension sensor (74, 74', 74") configured to measure the tension acting on its endpiece (72, 72', 72"), each rod (70, 70', 70") being mounted on an actuator system (71, 71', 71") configured to move the rod (70, 70', 70") along the second direction as a function of the tension measurement from the sensor;
the step of adjusting the tension of the fiber texture (210) being performed by a step of moving one or more rods (70, 70', 70") following a step of measuring the tension exerted on the endpiece (72, 72', 72") of each rod.

10. A method according to claim 8, wherein each rod (70, 70', 70") is moved independently in response to the tension measurement from the tension sensor (74, 74', 74") fitted thereto.

11. A method according to claim 8, wherein at least one follower roller (400, 400', 400", 500) is fitted with a tension adjustment device (700, 700', 700"), said tension adjustment device comprising a plurality of rows of rods (70, 70', 70") distributed uniformly around the follower roller (400, 400', 400", 500), the method including a step of moving the rods (70, 70', 70") arranged at the same axial position simultaneously in response to the tension measurements from the tension sensors (74, 74', 74") fitted thereto.
